# EUROPÄISCHE PATENTSCHRIFT

(11) **EP 0 695 473 B1**
(45) Veröffentlichungstag und Bekanntmachung des Hinweises auf die Patenterteilung: **12.03.1997**
(21) Anmeldenummer: 94913502.4
(22) Anmeldetag: 19.04.1994
(51) Int. Cl.: H02B 13/02, H02B 1/30

(54) **METALLGEKAPSELTES MITTELSPANNUNGS-SCHALTFELD MIT SCHALTERRAUM, SAMMELSCHIENENRAUM UND KABELANSCHLUSSRAUM**
METAL-ENCLOSED MEDIUM VOLTAGE SWITCHGEAR PANEL WITH SWITCHING COMPARTMENT, BUS BAR COMPARTMENT AND CABLE CONNECTING COMPARTMENT
TABLEAU ELECTRIQUE FERME BLINDE A TENSION MOYENNE AVEC COMPARTIMENT DE COMMUTATION, COMPARTIMENT DE BARRES OMNIBUS ET COMPARTIMENT DE RACCORDEMENT DE CABLES

(30) Priorität: 21.04.1993 DE 4313654
(43) Veröffentlichungstag der Anmeldung: 07.02.1996
(73) Patentinhaber: SIEMENS AKTIENGESELLSCHAFT, 80333 München (DE)
(72) Erfinder: GRONEMANN, Karl-Heinz, D-63128 Dietzenbach (DE); MÜLLER, Rolf, D-63785 Obernburg (DE)
(86) Internationale Anmeldenummer: DE9400516
(87) Internationale Veröffentlichungsnummer: WO9424745

(56) Entgegenhaltungen:
- EP-A- 0 129 695
- EP-A- 0 144 753
- EP-A- 0 459 593
- DE-A- 3 536 763
- FR-A- 1 143 559
- ASEA JOURNAL, Bd.46, Nr.3, 1973 Seiten 59 - 64 SVEN LINDBLAD 'Metal-enclosed high-voltage switchgear for safe operation'
- PT ELEKTRONICA-ELEKTROTECHNIEK, Bd.47, Nr.2, Februar 1992, RIJSWIJK E. DE MEULEMEESTER ET AL. 'Modulair schakelsysteem voor de middenspanning is 'gesloten'.'

## Beschreibung

Die Erfindung betrifft ein metallgekapseltes Mittelspannungs-Schaltfeld mit einem Schalterraum für einen Leistungsschalter sowie mit einem in einem rückwärtigen Teil des Schaltfeldes angeordneten Sammelschienenraum und einem Kabelanschlußraum, ferner mit einem oberhalb des Schalterraumes angeordneten Niederspannungsraum und frontseitigen Türen für den Schalterraum und den Niederspannungsraum.

Beispiele für Mittelspannungs-Schaltfelder sind z.B. der DE-Firmendruckschrift "Siemens: Mittelspannung-Leistungsschalteranlagen Programmübersicht", Best.-Nr. E 50001-U 229- Al, ausgegeben April 1991, zu entnehmen. Zu unterscheiden ist dabei zwischen solchen Schaltanlagen, deren Felder eine innere Schottung durch Zwischenwände aus Stahlblech aufweisen und solchen Schaltanlagen, bei denen derartige Schottungen nicht oder nur teilweise vorhanden sind. Bei vollständig geschotteten Schaltfeldern sind der Sammelschienenraum, der Kabelanschlußraum und der Schalterraum gegeneinander durch die genannten Schottwände getrennt, während bei ungeschotteten oder teilgeschotteten Schaltfeldern die genannten Räume als funktionelle Unterteilung eines Gesamtraumes aufzufassen sind.

Zur funktionellen Unterteilung von Schaltfeldern ist es aus der EP-A-0 459 593 bekannt, gleichartige Gehäusekörper vorzusehen und diese modulartig zusammenzusetzen. Allerdings lassen sich hiermit nicht die unterschiedlichen Bauformen für geschottete und ungeschottete Schaltfelder realisieren, da die funktionelle Zuordnung nicht raumunabhängig erfolgen kann.
Desweiteren ist aus der EP-A-0 144 753 ein Schaltfeld bekannt, bei dem die Funktionseinheiten zueinander vollgeschottet sind. Auf die Problematik von ungeschotteten oder teilgeschotteten Schaltfeldern ist nicht Bezug genommen.

Die erwähnten unterschiedlichen Ausführungsformen der Schaltfelder werden aufgrund der jeweils gegebenen Anforderungen ausgewählt. Dabei steht der besonders hohen Sicherheit bei einer Unterteilung des Innenraumes durch Schottwände aus Stahlblech die geringere Tiefe und damit der geringere Raumbedarf für Schaltfelder mit ungeschotteter oder teilgeschotteter Ausführung gegenüber. Da es sich in der Praxis erwiesen hat, daß beide Bauweisen von Schaltfeldern eingesetzt werden, ist es dementsprechend erforderlich, die zur Fertigung beider Bauweisen benötigten Werkzeuge und Vorrichtungen bereitzuhalten. Dies führt zu einem nicht unbeträchtlichen Aufwand.

Der Erfindung liegt hiervon ausgehend die Aufgabe zugrunde, die wahlweise Herstellung beider Bauweisen von Mittelspannungs-Schaltfeldern zu vereinfachen und hiermit den Aufwand zu senken.

Diese Aufgabe wird gemäß der Erfindung dadurch gelöst, daß der Kabelanschlußraum und der Sammelschienenraum in einem ersten, nach vorn offenen Gehäusekörper enthalten sind, ein Frontrahmen zur Halterung der Türanordnung des Schalterraumes und wenigstens ein Teil des Schalterraumes Bestandteil eines zweiten, nach hinten offenen Gehäusekörpers sind und der erste und der zweite Gehäusekörper die gleiche Breite und miteinander verbindbare Rahmenteile aufweisen.

Das Gerüst für ein Schaltfeld der ungeschotteten Bauweise wird nun dadurch hergestellt, daß ein erster und ein zweiter Gehäusekörper unmittelbar miteinander verbunden werden. Die selben Gehäusekörper sind jedoch auch für ein Schaltfeld der geschotteten Bauweise verwendbar, wenn nach einer Ausgestaltung der Erfindung zwischen den ersten und den zweiten Gehäusekörper ein dritter Gehäusekörper eingefügt wird, dessen Tiefe etwa entsprechend dem Raumbedarf für eine dem Schalterraum von dem Kabelanschlußraum und dem Sammelschienenraum abtrennende und Trennkontaktdurchführungen aufnehmende Schottwand bemessen ist. Nur dieser dritte Gehäusekörper, also ein Teil von verhältnismäßig geringem Volumen, ist zu fertigen, um unter Verwendung der ohnehin vorhandenen ersten und zweiten Gehäusekörper ein Schaltfeld in geschotteter Bauweise herstellen zu können.

Um das Zusammenfügen der Gehäusekörper zu erleichtern, empfiehlt es sich, daß der zweite Gehäusekörper an seiner Rückseite einen an den ersten bzw. dritten Gehäusekörper anfügbaren Verbindungsrahmen gesetzt.

Ferner ist es für den Zusammenbau der Gehäusekörper vorteilhaft, wenn der erste Gehäusekörper eine Bodenplatte mit profilierten Abkantungen an den Rändern aufweist, wobei ein Teilstück der Bodenplatte über einen Frontrahmen übersteht und daß der zweite Gehäusekörper auf das überstehende Teilstück der Bodenplatte aufsetzbar und mit dem Teilstück verbindbar ist.

Auch der dritte Gehäusekörper kann auf einfache Weise auf die anderen Gehäusekörper dadurch ausgerichtet werden, daß nach einer weiteren Ausgestaltung der Erfindung der dritte Gehäusekörper eine Bodenplatte mit randseitigen profilierten Abkantungen aufweist und daß ein auf der Bodenplatte montiertes Portal die Bodenplatte in ein hinteres Teilstück und ein vorderes Teilstück unterteilt, wobei das vordere Teilstück nach Länge und Form dem Teilstück der Bodenplatte des ersten Gehäusekörpers entspricht.

Für den sicheren Umgang mit Schaltfeldern der ungeschotteten Bauweise sind Arbeitsschutzplatten entwickelt worden, die den Sammelschienenraum von dem Schalterraum vorübergehend abtrennen. Solche Arbeitsschutzplatten sind auch bei Schaltfeldern nach der vorliegenden Erfindung verwendbar, wenn der Frontrahmen des zweiten Gehäusekörpers eine oberhalb der Türöffnung angeordnete schlitzartige Durchtrittsöffnung zum Einführen einer Arbeitsschutzplatte besitzt.

Die Erfindung wird im folgenden anhand der in den Figuren dargestellten Ausführungsbeispiele näher erläutert.

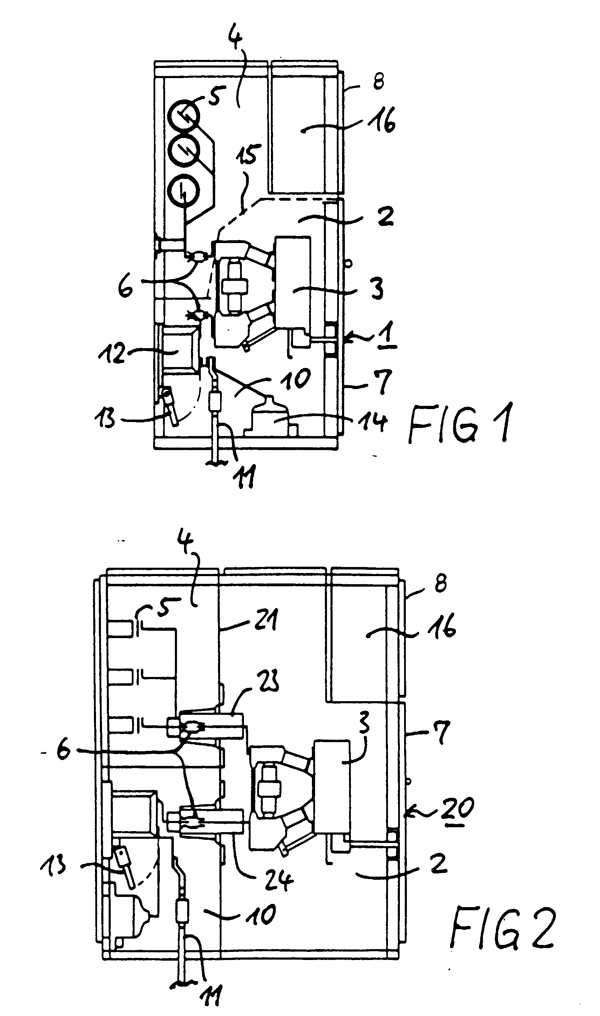

Die Figur 1 zeigt ein Mittelspannungs-Schaltfeld der ungeschotteten Bauweise in einer Seitenansicht mit abgenommener Abdeckung.

In der gleichen Darstellung wie die Figur 1 zeigt die Figur 2 ein Schaltfeld der geschotteten Bauweise.

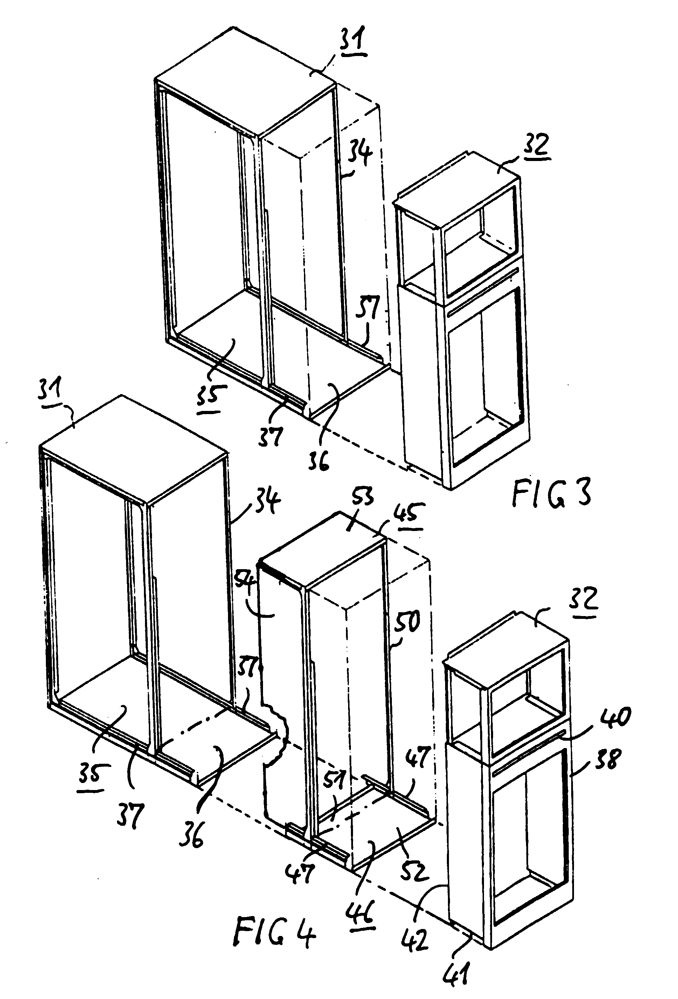

In der Figur 3 sind in einer perspektivischen und auseinandergezogenen Darstellung ein erster Gehäusekörper und ein zweiter Gehäusekörper zur Bildung eines Schaltfeldes der ungeschotteten Bauweise gezeigt.

Die gleichen Gehäusekörper wie in der Figur 3 und zusätzlich ein dazwischen einzufügender dritter Gehäusekörper sind in der Figur 4 gezeigt. Diese Anordnung dient zum Bau eines Schaltfeldes der geschotteten Bauweise.

Die Figuren 1 und 2 dienen lediglich zur Veranschaulichung an sich bekannter Gerätekonfigurationen bei ungeschotteten und geschotteten Mittelspannungs-Schaltanlagen und den hierdurch bedingten unterschiedlichen Raumbedarf der Schaltfelder. Der Aufbau der Gehäuse solcher Schaltfelder nach der Erfindung wird anschließend anhand der Figuren 3 und 4 erklärt. Das Schaltfeld 1 gemäß der Figur 1 weist einen Schalterraum 2 auf, in dem als Beispiel für ein Schaltgerät ein Vakuumleistungsschalter 3 gezeigt ist. Im oberen hinteren Bereich des Schaltfeldes 1 befindet sich ein Sammelschienenraum 4 mit Sammelschienen 5. Trennkontaktanordnungen gestatten es, den Leistungsschalter 3 aus der dargestellten Betriebsstellung bei geschlossener Tür 7 in eine Trennstellung zu verfahren. Im unteren hinteren Bereich des Schaltfeldes 1 befindet sich ein Kabelanschlußraum 10, in den von unten Kabel 11 eingeführt sind. Diese stehen in dem gezeigten Beispiel über einen Stromwandler 12 mit der abgangsseitigen Trennkontaktanordnung 6 in Verbindung. Als weitere Ausrüstungsteile sind ein Abgangserder 13 und ein Spannungswandler 14 gezeigt. Ferner ist durch eine gestrichelte Linie zwischen dem Schalterraum 2 und dem Sammelschienenraum 4 die Einführung einer Arbeitsschutzplatte 15 angedeutet. Oberhalb des vorderen Teiles des Schalterraumes 2 befindet sich ein Niederspannungsraum 16, der Anzeige-, Melde- und Bedienungseinrichtungen enthält.

Wie die Figur 1 erkennen läßt, sind der Schalterraum 2, der Sammelschienenraum 4 und der Kabelanschlußraum 10 lediglich Bereiche eines Gesamtraumes des Schaltfeldes 1 ohne gegenseitige Abschottung. Man spricht daher von einem Schaltfeld der ungeschotteten Bauweise.

Die anhand der Figur 1 erwähnten Komponenten sind auch in dem Schaltfeld 20 gemäß der Figur 2 enthalten und dort mit denselben Bezugszeichen versehen, jedoch sind der Schalterraum 2, der Sammelschienenraum 4 und der Kabelanschlußraum 10 voneinander durch Schottwände getrennt. Hierzu ist eine sich über die gesamte Höhe des Schaltfeldes 20 erstreckende Schottwand 21 sowie eine weitere, den Sammelschienenraum von dem Kabelanschlußraum 10 trennende Schottwand 22 vorgesehen. Zur Aufnahme der Trennkontaktanordnungen sind in die Schottwand 21 obere Durchführungen 23 und untere Durchführungen 24 eingesetzt. Durch die Schottwände 21 und 22 wird erreicht, daß ein in einem der Räume 2, 4 und 10 entstehender Störlichtbogen auf den betreffenden Raum beschränkt bleibt und die übrigen Räume nicht beeinträchtigt werden. Wie man erkennt, erfordert jedoch die Bauweise mit Schottwänden eine größere Tiefe des Schaltfeldes 20 gegenüber dem Schaltfeld 1 in der Figur 1.

Nachfolgend wird erläutert, wie trotz unterschiedlicher Bautiefe die Gehäuse der Schaltfelder unter Verwendung gleicher Gehäusekörper herstellbar sind.

Gemäß der Figur 3 ist ein Schaltfeld der ungeschotteten Bauweise etwa entsprechend der Figur 1 in einem Gehäuse 30 unterzubringen, das aus einem ersten Gehäusekörper 31 und einem zweiten Gehäusekörper 32 zusammensetzbar ist. In der Figur 3 sind die Gehäusekörper 31 und 32 auseinandergezogen dargestellt, wobei jedoch zur Veranschaulichung der Gesamtabmessungen im Anschluß an den Gehäusekörper 31 durch strichpunktierte Linien die Gesamtabmessungen veranschaulicht sind. Der Gehäusekörper 31 besteht teilweise aus Vollwandteilen und teilweise aus Gerüst- oder Rahmenelementen. Diese Teile bilden zwei Seitenrahmen 33 sowie einen Frontrahmen 34, über den eine Bodenplatte 35 nach vorn mit einem Teilstück 36 übersteht. Die Bodenplatte 35 besitzt profilierte Abkantungen 37. Der zweite Gehäusekörper 32 besitzt einen Frontrahmen 38 für eine Türanordnung und einen darüberliegenden Einführungsschlitz 40 für eine Arbeitsschutzplatte auf. Darüber befindet sich ein gesonderter Bereich, der als Niederspannungsraum (vgl. den Niederspannungsraum 16 in den Figuren 1 und 2) genutzt wird. Der Gehäusekörper 32 besitzt dieselbe Höhe wie der Gehäusekörper 31 und weist eine solche Tiefe auf, daß im zusammengesetzten Zustand, wie er in der Figur 3 im Anschluß an den Gehäusekörper 31 durch strichpunktierte Linien angedeutet ist, das für ein ungeschottetes Schaltfeld benötigte Volumen ergibt. Die über den Frontrahmen 34 vorstehenden profilierten Abkantungen 37 erleichtern das maßgenaue Zusammenfügen der beiden Gehäusekörper 31 und 32 dadurch, daß an den Seiten des zweiten Gehäusekörpers 32 eine entsprechende Ausnehmung 41 vorgesehen ist. Diese reicht bis an die Rückseite des Frontrahmens 38 heran. Die Verbindung der Gehäusekörper 31 und 32 kann in der Weise erfolgen, daß nach dem Aufsetzen des zweiten Gehäusekörpers 32 auf die Abkantungen 37 die der Frontrahmen 34 des Gehäusekörpers 31 mit einem rückseitigen Rahmen 42 des Gehäusekörpers 32 aufeinander ausgerichtet und mit einer Anzahl von Schrauben verbunden oder durchgehend oder örtlich verschweißt wird.

In der Figur 4 ist zusätzlich zu einem Gehäusekörper 31 und einem Gehäusekörper 32 ein dritter Gehäusekörper 45 gezeigt, der dieselbe Höhe und Breite wie die Gehäusekörper 31 und 32 besitzt. Im wesentlichen besteht der Gehäusekörper 45 aus einer Bodenplatte 46 mit profilierten Abkantungen 47, dessen Form den Abkantungen 36 des Gehäusekörpers 31 entspricht. Auf der Bodenplatte 46 befindet sich ein Portal 50 mit einem Dachblech und Seitenwänden. Das Portal 50 unterteilt die Bodenplatte 46 in ein kürzeres hinteres Teilstück 51 und ein längeres Teilstück 52, wobei das längere Teilstück 52 dem Teilstück 36 des Gehäusekörpers 31 entspricht. Das hintere Teilstück 51 ist so bemessen, daß sich zusammen mit dem Teilstück 36, der Abstand zwischen dem ersten Gehäusekörper 31 und dem zweiten Gehäusekörper 32 ergibt, der für ein geschottetes Schaltfeld gemäß der Figur 2 erforderlich ist. Ein Dachblech 53 und Seitenwände 54 des dritten Gehäusekörpers 45 sind mit dem ersten Gehäusekörper 31 zu verbinden. Die Frontseite des Portals 50 entspricht dem Frontrahmen 34 des ersten Gehäusekörpers 31, so daß die Verbindung des zweiten Gehäusekörpers 32 ebenso erfolgen kann wie in dem Beispiel gemäß der Figur 3. Es entsteht hierdurch ein Gehäuse mit großer struktureller Festigkeit und dem zum Bau eines geschotteten Schaltfeldes benötigten Volumen. Eine Schottwand mit Durchführungen für Trennkontakte kann etwa als gerüsthohes Bauteil zwischen den ersten Gehäusekörper 31 und den dritten Gehäusekörper 45 eingefügt werden.

## Patentansprüche

1. Metallgekapseltes Mittelspannungs-Schaltfeld (1) mit einem Schalterraum (2) für einen Leistungsschalter (3) sowie mit einem rückwärtigen Teil des Schaltfeldes angeordneten Sammelschienenraum (4) und einem Kabelanschlußraum (10), ferner mit einem oberhalb des Schalterraumes (2) angeordneten Niederspannungsraum (16) und fronseitigen Türen (7,8) für den Schalterraum (2) und den Niederspannungsraum (16),
**dadurch gekennzeichnet,** daß
- der Kabelanschlußraum (10) und der Sammelschienenraum (4) in einem ersten, nach vorn offenen Gehäusekörper (31) enthalten sind,
- ein Frontrahmen zur Halterung der Tür (7) des Schalterraumes (2) und wenigstens ein Teil des Schalterraumes (2) Bestandteil eines zweiten, nach hinten offenen Gehäusekörpers (32) sind, und
- der erste und der zweite Gehäusekörper (31,32) die gleiche Breite und miteinander verbindbare Rahmenteile (34,32) aufweisen.

2. Mittelspannungs-Schaltfeld nach Anspruch 1,
**dadurch gekennzeichnet**,
daß zwischen den ersten und den zweiten Gehäusekörper (31,32) ein dritter Gehäusekörper (45) einfügbar ist, dessen Tiefe etwa entsprechend dem Raumbedarf für eine den Schalterraum (2) von dem Kabelanschlußraum (10) und dem Sammelschienenraum (4) abtrennende und Trennkontaktdurchführungen (23) aufnehmende Schottwand (21) bemessen ist.

3. Mittelspannungs-Schaltfeld Nach Anspruch oder 2,
**dadurch gekennzeichnet**,
daß der zweite Gehäusekörper (32) an seiner Rückseite einen an den ersten bzw. dritten Gehäusekörper (31,45) anfügbaren Verbindungsrahmen (42) besitzt.

4. Mittelspannungs-Schaltfeld nach Anspruch 1,
**dadurch gekennzeichnet**, daß
der erste Gehäusekörper (31) eine Bodenplatte (35) mit profilierten Abkantungen (37) an den Rändern aufweist, wobei ein Teilstück (36) der Bodenplatte (35) über einen Frontrahmen (34) übersteht und daß der zweite Gehäusekörper (32 auf das überstehende Teilstück (36) der Bodenplatte (35) aufsetzbar und mit dem Teilstück (36) verbindbar ist.

5. Mittelspannungs-Schaltfeld nach Anspruch 4,
**dadurch gekennzeichnet**, daß
der dritte Gehäusekörper (45) eine Bodenplatte (46) mit randseitigen profilierten Abkantungen (47) aufweist und daß ein auf der Bodenplatte montiertes Portal (50) die Bodenplatte (46 in ein hinteres Teilstück (51) und ein vorderes Teilstück (52) unterteilt, wobei das vordere Teilstück (52) nach Länge und Form dem Teilstück (36) der Bodenplatte (35) des ersten Gehäusekörpers (31) entspricht.

6. Mittelspannungs-Schaltfeld nach einem der vorangehenden Ansprüche,
**dadurch gekennzeichnet**,
daß der Frontrahmen (38) des zweiten Gehäusekörpers (32) eine oberhalb der Türöffnung angeordnete schlitzartige Durchtrittsöffnung (40) zum Einführen einer Arbeitsschutzplatte (15) besitzt.

## Claims

1. Metal-enclosed medium-voltage switchpanel (1) having a switch compartment (2) for a circuit-breaker (3), and also a busbar compartment (4) arranged on a rear portion of the switchpanel and a connection-cable compartment (10), furthermore having a low-voltage compartment (16) arranged above the switch compartment (2), and doors (7, 8) on the front side for the switch compartment (2) and the low-voltage compartment (16), characterised in that
- the cable-connection compartment (10) and the busbar compartment (4) are contained in a first housing body (31) which is open at the front,
- a front frame for holding the door (7) of the switch compartment (2) and at least one portion of the switch compartment (2) are part of a second housing body (32) which is open at the rear, and
- the first housing body (31) and the second housing body (32) have the same width and frame portions (34, 32) which can be connected to each other.

2. Medium-voltage switchpanel according to claim 1, characterised in that there can be inserted between the first housing body (31) and the second housing body (32) a third housing body (45), the depth of which is dimensioned so as to correspond substantially to the space requirement for a partition plate (21) which separates the switch compartment (2) from the cable-connection compartment (10) and the busbar compartment (4) and receives isolating contact lead-throughs (23).

3. Medium-voltage switchpanel according to claim 1 or 2, characterised in that the second housing body (32) has on its rear side a connection frame (42) which can be attached to the first housing body (31) or to the third housing body (45).

4. Medium-voltage switchpanel according to claim 1, characterised in that the first housing body (31) has a base plate (35) having profiled folds (37) at the edges, with a section (36) of the base plate (35) protruding above a front frame (34), and in that the second housing body (32) can be placed on the protruding section (36) of the base plate (35) and can be connected to the section (36).

5. Medium-voltage switchpanel according to claim 4, characterised in that the third housing body (45) has a base plate (46) having profiled folds (47) at the edges, and in that a portal (50), which is mounted on the base plate, divides the base plate (46) into a rear section (51) and a front section (52), with the front section (52) corresponding to the section (36) of the base plate (35) of the first housing body (31) in terms of length and shape.

6. Medium-voltage switchpanel according to one of the preceding claims, characterised in that the front frame (38) of the second housing body (32) has a slit-like passage opening (40) arranged above the door opening, for inserting a work-guard plate (15).

## Revendications

1. Panneau de couplage moyenne tension (1), à enveloppe métallique, comprenant un compartiment d'interrupteur (2) pour un disjoncteur (3) ainsi qu'un compartiment de barres omnibus (4) placé dans une partie arrière du panneau de couplage et un compartiment de raccordement de câbles (10), et un compartiment basse tension (16) disposé en outre au-dessus du compartiment d'interrupteur (2), et des portes (7, 8) du côté frontal pour le compartiment d'interrupteur (2) et pour le compartiment basse tension (16),
caractérisé par le fait que
- le compartiment de raccordement de câbles (10) et le compartiment de barres omnibus (4) sont contenus dans un premier corps formant boîtier (31) ouvert vers l'avant,
- un cadre frontal, pour fixer la porte (7) du compartiment d'interrupteur (2), et au moins une partie du compartiment d'interrupteur (2) font partie d'un deuxième corps formant boîtier (32) ouvert vers l'arrière, et
- le premier et le deuxième corps formant boîtier (31, 32) ont la même largeur et présentent des parties de cadre (34, 32) qui peuvent être reliées l'une à l'autre.

2. Panneau de couplage moyenne tension selon la revendication 1,
caractérisé par le fait que
il peut être inséré, entre le premier et le deuxième corps formant boîtier (31, 32), un troisième corps formant boîtier (45), dont la profondeur est calculée sensiblement en fonction de la place nécessaire pour une cloison (21) séparant le compartiment d'interrupteur (2) du compartiment de raccordement de câbles (10) et du compartiment de barres omnibus (4), et comportant des traversées de contacts de coupure (23).

3. Panneau de couplage moyenne tension selon la revendication 1 ou 2,
caractérisé par le fait que
le deuxième corps formant boîtier (32) présente, du côté postérieur, un cadre de jonction (42), qui peut être associé au premier ou bien au troisième corps formant boîtier (31, 45).

4. Panneau de couplage moyenne tension selon la revendication 1,
caractérisé par le fait que
le premier corps formant boîtier (31) présente une plaque de base (35) à bords à profils biseautés (37), une partie (36) de la plaque de base (35) dépassant d'un cadre frontal (34), et le deuxième corps formant boîtier (32) peut être placé sur la partie saillante (36) de la plaque de base (35) et être relié à la partie (36).

5. Panneau de couplage moyenne tension selon la revendication 4, caractérisé par le fait que
le troisième corps formant boîtier (45) présente une plaque de base (46 ) à bords à profils biseautés (47), et qu'un portique (50), monté sur la plaque de base, divise la plaque de base (46) en une partie arrière (51) et en une partie avant (52), la partie avant (52) correspondant, en longueur et en forme, à la partie (36) de la plaque de base (35) du premier corps formant boîtier (31).

6. Panneau de couplage moyenne tension selon l'une des revendications précédentes,
caractérisé par le fait que
le cadre frontal (38) du deuxième corps formant boîtier (32) comporte une ouverture de passage (40) en forme de fente située au-dessus de la baie pour la porte, pour l'introduction d'une plaque de sécurité (15) de travail.
